# EUROPEAN PATENT SPECIFICATION

(11) **EP 4 593 328 B1**
(45) Date of publication and mention of the grant of the patent: **24.06.2026**
(21) Application number: 23893001.0
(22) Date of filing: 26.04.2023
(51) Int. Cl.: H04L 9/40, G06F 21/31, G06F 21/32, G06F 21/64, H04L 69/22, H04L 65/1104, H04L 65/1089, H04L 9/32, H04L 65/1016, H04L 65/1069

(54) **ELECTRONIC SIGNATURE VERIFICATION METHOD AND APPARATUS**
VERFAHREN UND VORRICHTUNG ZUR ÜBERPRÜFUNG ELEKTRONISCHER UNTERSCHRIFTEN
PROCÉDÉ ET APPAREIL DE VÉRIFICATION DE SIGNATURE ÉLECTRONIQUE

(30) Priority: 23.11.2022 CN 202211470727
(43) Date of publication of application: 30.07.2025
(73) Proprietor: Huawei Technologies Co., Ltd., Shenzhen, Guangdong 518129 (CN)
(72) Inventor: FENG, Junhui, Shenzhen, Guangdong 518129 (CN); ZHANG, Chunhe, Shenzhen, Guangdong 518129 (CN); ZHUANG, Naifeng, Shenzhen, Guangdong 518129 (CN); WANG, Kun, Shenzhen, Guangdong 518129 (CN); XU, Changyue, Shenzhen, Guangdong 518129 (CN)
(74) Representative: Maiwald GmbH
(86) International application number: PCT/CN2023/090977
(87) International publication number: WO 2024/108900

(56) References cited:
- CN-A- 103 701 606
- CN-A- 107 240 023
- CN-A- 109 409 058
- CN-A- 109 815 734
- CN-A- 114 139 120
- KR-B1- 101 285 362
- US-A1- 2016 048 696
- US-A1- 2019 311 107
- US-A1- 2020 272 715

## Description

### CROSS-REFERENCE TO RELATED APPLICATIONS

### TECHNICAL FIELD

Embodiments of this application relate to the field of communication technologies, and in particular, to an electronic signature verification method and an apparatus.

### BACKGROUND

With popularization of voice over long term evolution (voice over long term evolution, VoLTE), online businesses are gradually handled through voice over long term evolution. Voice over long term evolution may be referred to a high-definition call or voice over long term evolution. It is difficult to verify an electronic signature of a user during online business handling.

Currently, a manner of verifying the electronic signature of the user is as follows: A terminal device of the user sends the electronic signature to a terminal device of a customer service, and the customer service manually verifies the electronic signature. However, in this manner, the customer service needs to handle the electronic signature manually, and the customer service may tamper with the electronic signature, leading to low reliability of a verification result of the electronic signature.

US 2016/048696 A1 discloses a method determining attestation requirements for electronically signing an electronic document. The method modifies the document based in part on the requirements, and then provides the modified document to users requested to electronically sign the document, wherein the users are only permitted to electronically sign the document in circumstances satisfying the requirements. An electronic signature service can generate a document whose signing needs to be witnessed and/or recorded according to attestation requirements. The document may be associated with number of signers. The electronic signature service may determine one or more witnesses of the signers and may determine applicable attestation requirements based on the witnesses, the signers, and the document. Further, the electronic signature service may record proceedings associated with collecting signatures for the document and record and/or pause a workflow associated with the document to meet the applicable requirements.

US 2020/272715 A1 discloses an electronic signature service ("ESS") configured to manage electronic identity cards. In some embodiments, the ESS generates and manages an electronic identity card for a user, based on personal information of the user, activity information related to the user's actions with respect to the ESS, and/or social networking information related to the user. The electronic identity card of a signer may be associated with an electronic document signed via the ESS, so that users may obtain information about the signer of the document. The ESS may also generate a trust score for the user based on activity information related to the user's actions with respect to the ESS and/or other factors. The trust score may be used to recommend authentication mechanisms to use with respect to electronic signature transactions.

KR 101285362 B1 discloses an electronic signature authentication system to simply and easily input electronic signature requested by a server using a signer mobile terminal owned by a signer and to authenticate the inputted electronic signature by an electronic signature authentication server of a corresponding service organization. An electronic signature authentication server performs electronic signature authentication by comparing an electronic signature image included in decoded electronic signature authentication request information and a prestored electronic signature image corresponding to signer's identification information. The electronic signature authentication server transmits electronic signature confirmation information to a corresponding service organization server when the electronic signature authentication is successful. The electronic signature confirmation information is created by encrypting the electronic signature image, service organization identification information, service identification information, signer identification information and electronic signature request date and time information. The service organization server corresponds to the service organization identification information included in the decoded electronic signature authentication request information.

### SUMMARY

The invention is defined by an electronic signature verification method, an electronic signature verification method, a communication apparatus, a communication apparatus, and a system comprising the two apparatuses. Preferred embodiments are defined in the dependent claims. Embodiments of this application provide an electronic signature verification method and an apparatus, to improve reliability of a verification result of an electronic signature.

### BRIEF DESCRIPTION OF DRAWINGS

FIG. 1A is a diagram of a scenario to which an embodiment of this application is applicable;
FIG. 1B is a diagram of another scenario to which an embodiment of this application is applicable;
FIG. 2A is a diagram of still another scenario to which an embodiment of this application is applicable;
FIG. 2B is a diagram of yet still another scenario to which an embodiment of this application is applicable;
FIG. 3 is a diagram of yet still another scenario to which an embodiment of this application is applicable;
FIG. 4 is a schematic flowchart of an electronic signature verification method according to an embodiment of this application;
FIG. 5 is a diagram of an interface change of a first terminal device in a process of entering an electronic signature according to an embodiment of this application;
FIG. 6 is a diagram of an interface of a first terminal device according to an embodiment of this application;
FIG. 7A and FIG. 7B are a schematic flowchart of another electronic signature verification method according to an embodiment of this application;
FIG. 8 is a diagram of a structure of a communication apparatus according to an embodiment of this application; and
FIG. 9 is a diagram of a structure of another communication apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms in embodiments of this application, to facilitate understanding of a person skilled in the art.
1. A terminal device is a device having a wireless transceiver function, and may be a fixed device, a mobile device, a handheld device, a wearable device, a vehicle-mounted device, or a wireless apparatus (for example, a communication module or a chip system) disposed in the foregoing device. The terminal device is configured to connect a person, an object, a machine, and the like, and may be widely used in various scenarios. For example, the terminal device includes but is not limited to a terminal device in the following scenarios: cellular communication, device-to-device (device-to-device, D2D) communication, vehicle-to-everything (vehicle-to-everything, V2X) communication, machine-to-machine/machine-type communication (machine-to-machine/machine-type communication, M2M/MTC), an internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, smart office, smart wearable, smart transportation, a smart city (smart city), an uncrewed aerial vehicle, a robot, and the like. The terminal device may be sometimes referred to as user equipment (user equipment, UE), a terminal, an access station, a UE station, a remote station, a wireless communication device, a user apparatus, or the like.
2. A network device includes, for example, an access network device (or referred to as an access network element) and/or a core network device (or referred to as a core network element).

The access network device is a device having a wireless transceiver function, and is configured to communicate with the terminal device. The access network device includes but is not limited to a base station (BTS, NodeB, eNodeB/eNB, or gNodeB/gNB) and a transmission reception point (t(r)ansmission reception point, TRP) in a communication system, a subsequent evolved 3GPP base station, an access node in a wireless fidelity (wireless fidelity, Wi-Fi) system, a wireless relay node, a wireless backhaul node, and the like. The base station may be a macro base station, a micro base station, a picocell base station, a small cell, a relay station, or the like. A plurality of base stations may support networks of a same access technology mentioned above, or may support networks of different access technologies mentioned above. The base station may include one or more co-site or non-co-site transmission reception points. The network device may alternatively be a radio controller, a central unit (central unit, CU), which may also be referred to as an aggregation unit, and/or a distributed unit (distributed unit, DU) in a cloud radio access network (cloud radio access network, C(R)AN) scenario. Alternatively, the network device may be a server, a wearable device, a vehicle-mounted device, or the like. For example, a network device in the vehicle-to-everything (vehicle-to-everything, V2X) technology may be a road side unit (road side unit, RSU). The following uses an example in which the access network device is a base station for description. A plurality of network devices in the communication system may be base stations of a same type, or may be base stations of different types. The base station may communicate with the terminal device, or may communicate with the terminal device via a relay station. The terminal device may communicate with the plurality of base stations in different access technologies.

The core network device is configured to implement at least one of functions such as mobility management, data processing, session management, and policy and charging. Names of devices that implement a core network function in systems of different access technologies may be different. This is not limited in embodiments this application. A 5G system is used as an example, and the core network device includes an access and mobility management function (access and mobility management function, AMF), a session management function (session management function, SMF), a PCF, a user plane function (user plane function, UPF), and the like.

3. An electronic signature is data included in or attached to a data message in an electronic form, and identifies an identity of a signer and indicates that the signer recognizes content of the data message. The electronic signature is, for example, a signature image.

4. A computing device is a device having a processing capability. The computing device is, for example, a server or a terminal device.

5. An application is a software module that provides a service, and may be run in the terminal device. A form of the application is, for example, an application (application, APP) program, an applet, or a web page pre-installed in the terminal device.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including a singular item (piece) or any combination of a plurality of items (pieces). For example, at least one of a, b, or c indicates a, b, c, a and b, a and c, b and c, or a, b, and c, where a, b, and c may be singular or plural.

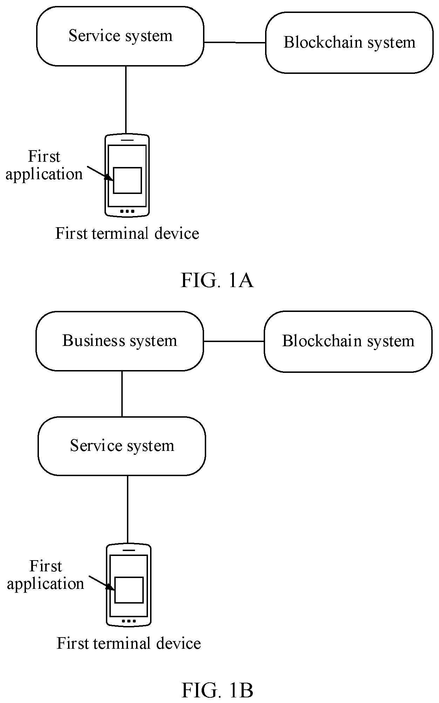

FIG. 1A is a diagram of a scenario to which an embodiment of this application is applicable. Alternatively, FIG. 1A may also be understood as a diagram of an architecture of a communication system (which may also be referred to as an electronic signature verification system). As shown in FIG. 1A, the scenario includes a first terminal device and a service system. For an implementation of the first terminal device, refer to the foregoing descriptions. The service system may be implemented by one or more computing devices.

The first terminal device may correspond to a user. In other words, the user may perform an operation on the first terminal device. Optionally, a first application may be run in the first terminal device, and the first application is, for example, a service application or a social application.

The first terminal device may communicate with the service system. For example, the first terminal device may send a feedback message to the service system. The feedback message indicates a first electronic signature. Correspondingly, the service system may receive the feedback message from the first terminal device. The service system may verify the first electronic signature. Content of the feedback message and a specific process of verifying the first electronic signature are described below.

In a possible implementation, the scenario shown in FIG. 1A further includes a blockchain system. The blockchain system may communicate with the service system.

For example, the blockchain system may include a plurality of blockchain nodes. After generating a block, the blockchain node broadcasts the block. After receiving the block, another blockchain node performs block verification on the block. After the verification succeeds, a local blockchain is updated. The service system may perform encryption processing on the first electronic signature, and write a result of encryption processing into the blockchain system.

FIG. 1B is a diagram of another scenario to which an embodiment of this application is applicable. Alternatively, FIG. 1B may also be understood as a diagram of an architecture of a communication system (which may also be referred to as an electronic signature verification system). As shown in FIG. 1B, the scenario includes a first terminal device, a service system, and a business system. Different from FIG. 1A, FIG. 1B further includes the business system. The business system may be implemented by one or more computing devices. For content of the first terminal device, refer to the foregoing content described in FIG. 1A.

The first terminal device may communicate with the service system. For example, the first terminal device may send a feedback message to the service system. The feedback message indicates a first electronic signature. Correspondingly, the service system may receive the feedback message from the first terminal device. The service system may determine a verification result of the first electronic signature. Content of the feedback message and a specific process of determining the verification result of the first electronic signature are described below.

The service system may communicate with the business system. For example, the service system may send the first electronic signature to the business system, and the business system may verify the first electronic signature.

In a possible implementation, the scenario shown in FIG. 1B further includes a blockchain system. The blockchain system may communicate with the business system.

For example, the blockchain system may include a plurality of blockchain nodes. After generating a block, the blockchain node broadcasts the block. After receiving the block, another blockchain node performs block verification on the block. After the verification succeeds, a local blockchain is updated. The business system may perform encryption processing on the first electronic signature, and write a result of encryption processing into the blockchain system.

In FIG. 1B, an example in which a quantity of first terminal devices is 1 is used, and actually, the quantity of first terminal devices is not limited.

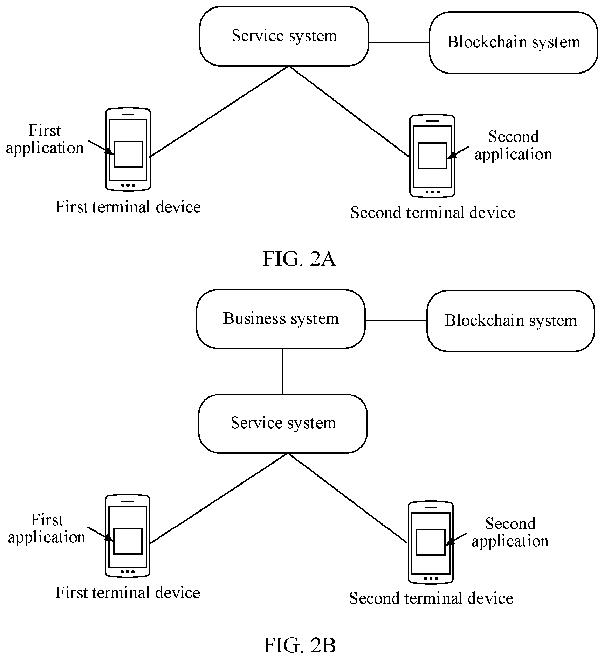

FIG. 2A is a diagram of still another scenario to which an embodiment of this application is applicable. Alternatively, FIG. 2A may be understood as a diagram of an architecture of a communication system. As shown in FIG. 2A, the scenario includes a first terminal device, a service system, and a second terminal device. Different from FIG. 1A, FIG. 2A further includes the second terminal device. For implementations of the first terminal device, the service system, and the business system, refer to content in FIG. 1A.

For example, the second terminal device may correspond to a customer service (or an agent). In other words, the customer service may perform an operation on the second terminal device. Optionally, a second application may be run in the second terminal device. The second application may be an application corresponding to the service system. In other words, the service system may provide background support for the second application. The second application is, for example, a service application.

The second terminal device may communicate with the first terminal device. For example, the second terminal device may establish a call with the first terminal device. The second terminal device may also communicate with the service system. For example, the second terminal device sends a request message to the service system. Correspondingly, the service system may receive a request message from the first terminal device, and process the request message.

The service system in FIG. 2A may provide a service for the second terminal device corresponding to the customer service, or provide a service for the second application in the second terminal device. Therefore, the service system in FIG. 2A may also be referred to as a customer service system or a customer service platform.

FIG. 2B is a diagram of yet still another scenario to which an embodiment of this application is applicable. Alternatively, FIG. 2B may be understood as a diagram of an architecture of a communication system. As shown in FIG. 2B, the scenario includes a first terminal device, a service system, a business system, and a second terminal device. The service system in FIG. 2B may also be referred to as a customer service system or a customer service platform. Different from FIG. 2A, FIG. 2B further includes the business system. For an implementation of the business system, refer to content in FIG. 1B.

For example, the second terminal device may correspond to a customer service (or an agent). In other words, the customer service may perform an operation on the second terminal device. Optionally, a second application may be run in the second terminal device. The second application may be an application corresponding to the business system. In other words, the business system may provide background support for the second application. The second application is, for example, a service application.

The second terminal device may communicate with the first terminal device. For example, the second terminal device may establish a call with the first terminal device. The second terminal device may also communicate with the business system through the service system.

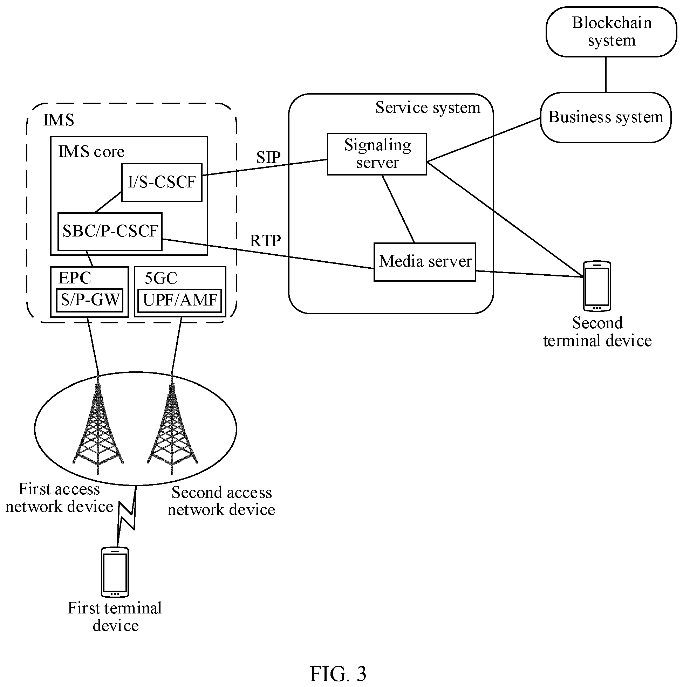

FIG. 3 is a diagram of yet still another scenario to which an embodiment of this application is applicable. Alternatively, FIG. 3 may be understood as a diagram of an architecture of a communication system. Alternatively, FIG. 3 may be understood as a diagram of deployment of devices included in the communication system in FIG. 2B. As shown in FIG. 3, the scenario includes a first terminal device, an access network device, an internet protocol multimedia subsystem (internet protocol multimedia subsystem, IMS) (which may also be referred to as an IMS domain), a service system, a business system, and a second terminal device. For implementations of the first terminal device, the access network device, and the second terminal device, refer to the foregoing descriptions.

In a possible implementation, a first application may also be run in the first terminal device. For content of the first application, refer to the foregoing descriptions. A second application may also be run in the second terminal device. For content of the second application, refer to the foregoing descriptions.

In a possible implementation, the IMS may include a packet core (evolved packet core, EPC) network, a 5th generation core (5th generation core, 5GC) network, and an IMS core (core) network.

For example, the EPC or the 5GC may communicate with the first terminal device through the access network device (for example, a first access network device or a second access network device). The EPC may communicate with the IMS core network. The first access network device may be, for example, a 4G base station, and the second access network device may be, for example, a 5G base station. The IMS core network may communicate with the service system, and the IMS core network may also communicate with the EPC.

Optionally, the EPC includes a serving/packet data network gateway (serving/packet data network gateway, S/PDN-GW or S/P-GW). The S/P-GW is a core device in the EPC. The S/P-GW is configured to implement a function provided by a gateway logical entity, and the gateway logical entity includes a serving gateway and a PDN. The serving gateway transmits business plane data to a device in a radio access network. The device in the radio access network includes the first access network device and the second access network device. The PDN is oriented to another data network and implements access to and interaction with a plurality of public data networks. The PDN may be, for example, an anchor in an evolved packet system (evolved packet system, EPS).

Optionally, the 5GC includes various network elements, for example, a user plane function (user plane function, UPF) and an access and mobility management function (access and mobility management function, AMF).

For example, the UPF is responsible for the user plane function, packet routing and forwarding, policy implementation, traffic reporting, and quality of service (quality of service, QoS) processing. The AMF is responsible for the access and mobility management function, performs registration, connection, reachability, and mobility management, provides a session management message transmission channel for the first terminal device and a session management function (session management function, SMF), and provides an authentication function for a user during access. The AMF is an access point of a core network control plane in a terminal and a radio access network.

Optionally, the IMS core network includes a interrogating-call session control function (interrogating-call session control function, I-CSCF), a serving-call session control function (serving-call session control function, S-CSCF), a session border controller (session border controller, SBC), a proxy-call session control function (proxy-call session control function, P-CSCF), and the like. The I-CSCF and the S-CSCF may be briefly referred to as I/S-CSCF.

The I-CSCF is a unified initial entry point in the IMS network and is responsible for assignment and query of the S-CSCF for user registration. The S-CSCF is a central node of the IMS core network, and is mainly used for the user registration, authentication control, session routing, business trigger control, and maintenance of session status information. The SBC is configured to provide secure access and media processing. The P-CSCF is an entry node for the user to access the IMS core network and is mainly responsible for proxy of signaling and messages.

Optionally, the service system includes a signaling server and a media server.

For example, the media server is configured to be responsible for processing and playing of audio and video media, application and release of a conference site, encoding and decoding of audio and a video, desktop sharing, and electronic signature processing. The signaling server is configured to be responsible for signaling negotiation and processing, and control a customer service to join and exit a session.

The signaling server may communicate with the S-CSCF through a session initiation protocol (session initiation protocol, SIP). The media server may communicate with the SBC through a real-time transport protocol (real-time transport protocol, RTP).

Currently, a video call may be established between a first terminal device of the user and a second terminal device of the customer service. The second terminal device obtains, through the video call, an electronic signature entered by the user, and verifies the obtained electronic signature, to complete an electronic signature verification process. The second terminal device may further send a verification result of the electronic signature to the business system. The first terminal device is, for example, the first terminal device in FIG. 3, the second terminal device is, for example, the second terminal device in FIG. 3, and the business system is, for example, the business system in FIG. 3.

It can be learned that, currently, this manner of verifying the electronic signature depends on a manual operation of the customer service, and the customer service may tamper with the electronic signature. This reduces reliability of the verification result of the electronic signature.

Therefore, embodiments of this application provide an electronic signature verification method. In the method, the service system may be triggered by a first request message, to request the electronic signature (for example, a first electronic signature) from the first terminal device. After obtaining the first electronic signature from the first terminal device, the service system may further determine a verification result of the first electronic signature. In this way, the customer service does not need to intervene in the electronic signature verification process. This improves reliability of verifying the electronic signature. In addition, operations of the customer service may be further reduced, which helps improve customer service experience.

The following describes the electronic signature verification method in embodiments of this application with reference to the accompanying drawings.

In the accompanying drawings corresponding to embodiments of this application, steps represented by dashed lines are optional steps. In embodiments of this application, the first terminal device is, for example, the first terminal device shown in any one of FIG. 1A, FIG. 1B, FIG. 2A, FIG. 2B, or FIG. 3, the second terminal device is, for example, the second terminal device shown in FIG. 2A, FIG. 2B, or FIG. 3, the service system is, for example, the service system shown in any one of FIG. 1A, FIG. 1B, FIG. 2A, FIG. 2B, or FIG. 3, the business system is, for example, the business system in any one of FIG. 1A, FIG. 1B, FIG. 2A, FIG. 2B, or FIG. 3, and the IMS is, for example, the IMS shown in FIG. 3. In addition, in embodiments of this application, the media server is, for example, the media server shown in FIG. 3, and the signaling server is, for example, the signaling server shown in FIG. 3.

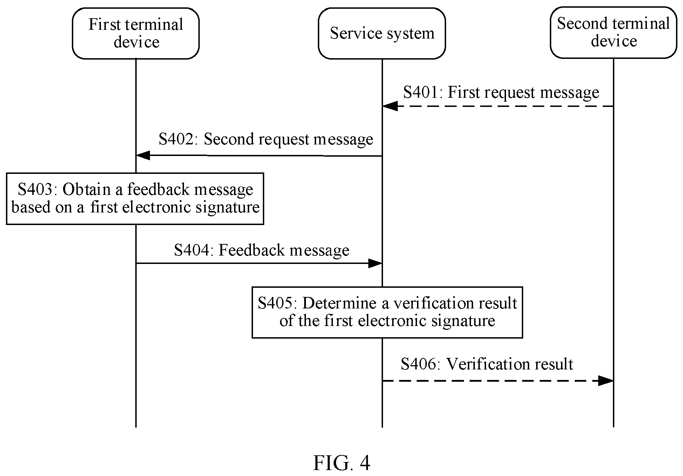

FIG. 4 is a schematic flowchart of an electronic signature verification method according to an embodiment of this application. The schematic flowchart includes the following steps.

S401: A second terminal device sends a first request message to a service system. Correspondingly, the service system receives the first request message from the second terminal device.

For example, a customer service assists a user in handling a business. However, according to a business handling rule, the business can be ended only after the user completes performing an electronic signature online. Therefore, the customer service may send the first request message to the service system through the second terminal device, to obtain a first electronic signature of the user through the service system. The second terminal device may send the first request message to the service system through an IMS. Alternatively, the second terminal device directly sends the first request message to the service system.

The first request message may be used to request the first electronic signature of the user, and the first request message may indicate a first terminal device corresponding to the user. Optionally, the first request message includes an identifier of a first session. The identifier of the first session indicates the first terminal device. The first session indicates a call channel established between the second terminal device and the first terminal device.

For example, before the second terminal device sends the first request message to the service system, the second terminal device may establish the call channel with the first terminal device through the service system. The call channel may be a channel for an interactive user session. The interactive user session may be used to implement interaction of multimedia elements. The multimedia element is, for example, one or more of a video, an image, and audio. Communication for the interactive user session may include a video call, an interactive voice recognition (interactive voice recognition, IVR), an audio call, instant messaging, an online game, virtual reality, or the like. The service system may determine the identifier of the first session corresponding to the call, and send the identifier of the first session to the first terminal device and the second terminal device. The second terminal device may include the identifier of the first session in the first request message, and send the first request message to the service system. After receiving the first request message, the service system may determine the first terminal device based on the identifier of the first session in the first request message.

Alternatively, the first request message includes an identifier of the first terminal device, and the identifier of the first terminal device indicates the first terminal device. The identifier of the first terminal device is, for example, a media access control (media access control, MAC) address of the first terminal device.

In another possible implementation, the first terminal device may generate the first request message based on a first operation of the user, and send the first request message to the service system. Correspondingly, the service system receives the first request message from the first terminal device. The first operation indicates to perform verification on the electronic signature.

When a first application is run in the first terminal device, the user may perform the first operation in the first application. The first terminal device generates the first request message in response to the first operation.

**In** this possible implementation, the service system receives the first request message from the first terminal device. Therefore, the second terminal device does not need to perform step S401, that is, step S401 is an optional step, and is shown by using a dashed line in FIG. 4.

S402: The service system sends a second request message to the first terminal device. Correspondingly, the first terminal device receives the second request message from the service system. The second request message may be used to request to obtain the electronic signature of the user.

**In** a possible implementation, before the service system sends the second request message to the first terminal device, the service system may communicate with the first terminal device based on the call channel indicated by the first session. In this case, the service system may send the second request message to the first terminal device through a session initiation protocol (session initiation protocol, SIP). The service system may send the second request message to the first terminal device through the IMS. Alternatively, the service system directly sends the second request message to the first terminal device.

**In** an example, the second request message may be carried in a first session description protocol (session description protocol, SDP) message. The first session description protocol message may be referred to as a session description protocol message. In this way, it means that the service system describes (or encapsulates or encodes) the second request message by using the session description protocol.

**In** a possible implementation, the second request message indicates (or includes) an identifier of an electronic signature function. The identifier of the electronic signature function may also be referred to as an identifier of an electronic signature domain. The identifier of the electronic signature function indicates that the service system has a capability of transmitting the electronic signature. Optionally, the identifier of the electronic signature function may indicate to request to obtain the electronic signature from the first terminal device.

When the second request message is carried in the first session description protocol message, the identifier of the electronic signature function may be carried in a first field of the first session description protocol message.

For example, the first field may be a field in a header (which may also be referred to as a header field) of the first session description protocol message.

For example, the first field is a contact (contact) field or a supported (supported) field in the session description protocol message. The contact field indicates (or declares) a capability that the service system expects to support, or a capability that the service system actually supports. The supported field indicates (or declares) an actual capability of the service system.

Alternatively, the first field may be a field in body text of the first session description protocol message. For example, the first field is an a field in an M row. The M row indicates (or declares) a business type supported by the service system, and the a field indicates (or declares) information corresponding to the business type supported by the service system.

For example, the service system has the capability of transmitting the electronic signature in a video business type. Correspondingly, the M row in the first session description protocol message may indicate the video business type supported by the service system, and the a field may indicate that the service system has the capability of transmitting the electronic signature.

In the foregoing implementation, the identifier of the electronic signature function may be carried in an existing field of the first session description protocol message, and a new field does not need to be added to the first session description protocol message. This reduces changes to a format of the first session description protocol message. Certainly, in another possible implementation, the first field may also be the new field added to the first session description protocol message. This is not specifically limited in embodiments of this application.

In a possible implementation, the second request message further includes first media resource information. The first media resource information indicates a first resource used by the service system to transmit a video. The first resource includes, for example, one or more of an internet protocol (internet protocol, IP) address, a video port number, an audio port number, an audio encoding resource, an audio decoding resource, a video encoding resource, and a video decoding resource of the service system. Optionally, the first resource further includes a license (license). The license is used to limit the capability of the service system to transmit the electronic signature. The first resource may be preconfigured in the service system through a protocol, or may be allocated by the service system.

S403: The first terminal device obtains a feedback message based on the first electronic signature. The feedback message may indicate the first electronic signature.

After receiving the second request message, the first terminal device may parse the second request message, and determine that the service system requests to obtain the electronic signature of the user. Therefore, the first terminal device may obtain the first electronic signature of the user.

For example, the first terminal device displays a signature box. The signature box may also be referred to as a signature input box, an input box, or the like. The user may input the first electronic signature in the signature box. Correspondingly, the first terminal device obtains the first electronic signature. The first electronic signature may be in a plurality of forms, for example, an image, a text, or a video. For example, the first terminal device may directly use a trajectory entered by the user in the signature box as a first signature.

Optionally, the signature box may display a first prompt message, and the first prompt message is used to prompt the user to enter a signature.

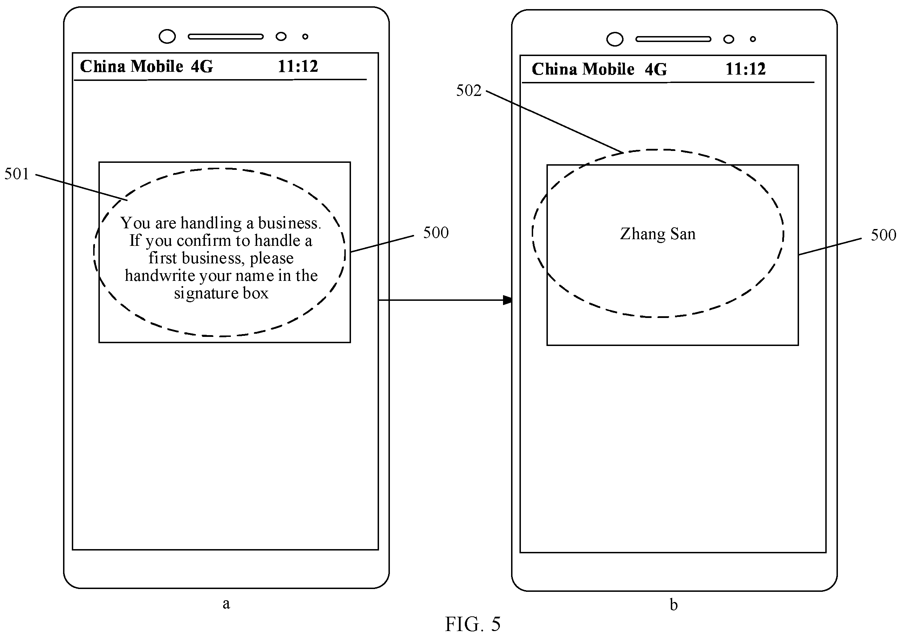

FIG. 5 is a diagram of an interface change of a first terminal device in a process in which a user enters a signature according to an embodiment of this application. As shown in a in FIG. 5, the first terminal device may display a signature box 500, and the signature box 500 includes a first prompt message 501. The first prompt message 501 is specifically "You are handling a business. If you confirm to handle the business, please handwrite your name in the signature box" in FIG. 5. The user may handwrite the first electronic signature in the signature box 500, so that the first terminal device may obtain the first electronic signature 502. The first electronic signature 502 is, for example, "Zhang San" shown in b in FIG. 5.

In a possible implementation, the first terminal device may further shoot, through a camera, a video (namely, a signature video) in a process in which the user enters the electronic signature. The signature video and the first electronic signature are used to generate the feedback message. For example, the first terminal device encodes the first electronic signature and the signature video based on a second resource, to obtain the feedback message.

To ensure privacy of the user, in embodiments of this application, the first terminal device may obtain a permission to enable the camera, and may enable the camera after obtaining the permission to enable the camera.

For example, the first terminal device may display a second prompt message. The second prompt message is used to request the permission to enable the camera from the user, and the first terminal device determines, based on a second operation of the user, that the permission to enable the camera has been obtained. The second operation indicates agreement to enable the camera. If the user performs a third operation, the first terminal device does not enable the camera. The third operation indicates refusal to enable the camera.

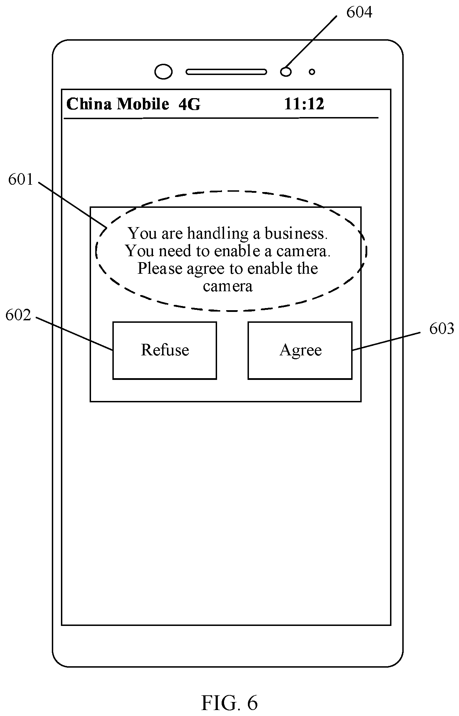

FIG. 6 is a diagram of an interface of a first terminal device according to an embodiment of this application. As shown in FIG. 6, the first terminal device includes a camera 604. The first terminal device displays a second prompt message 601, which is specifically "You are handling a business. You need to enable a camera. Please agree to enable the camera" in FIG. 6. The second terminal device further displays a control 602 for refusing to enable the camera and a control 603 for agreeing to enable the camera. If the user taps the control 603 for agreeing to enable the camera, which means that the user performs the second operation, the first terminal device may determine to enable the camera 604. If the user taps the control 602 for refusing to enable the camera, which means that the user performs the third operation, the first terminal device may determine not to enable the camera 604.

After obtaining the first electronic signature, the first terminal device may generate feedback message based on the first electronic signature. For example, the first terminal device may encode the first electronic signature in a preset encoding manner, to obtain the feedback message.

Alternatively, after obtaining the first electronic signature and the signature video, the first terminal device may generate the feedback message based on the first electronic signature and the signature video. The first terminal device may also encode the first electronic signature and the signature video in the preset encoding manner, to obtain the feedback message.

When the second request message further includes the first media resource information, in a possible implementation, the first terminal device may send second media resource information to the service system. The second media resource information indicates the second resource used by the first terminal device to transmit a video, and the second resource may be used to send the feedback message. For content of the second resource, refer to the foregoing content of the first resource. In this way, it means that a resource negotiation process between the first terminal device and the service system is completed.

S404: The first terminal device sends the feedback message to the service system. Correspondingly, the service system receives the feedback message from the first terminal device.

For example, the first terminal device may directly send the feedback message to the service system, or may send the feedback message to the service system through the IMS.

In a possible implementation, when the first resource includes the license, the first terminal device may determine that the license is valid, and then may send the feedback message to the service system. That the license is valid may be understood as that the service system has a legal capability of transmitting the electronic signature.

In a possible implementation, if the first electronic signature is in a form of a video or an image, the first terminal device may send the feedback message to the service system through the second resource. Correspondingly, the service system may receive the feedback message through the first resource. Further, the service system may decode the feedback message based on the second resource. For example, the service system may decode the feedback message based on the video decoding resource indicated by the second resource, to successfully obtain the first electronic signature. In this way, it is ensured that the service system can successfully decode the feedback message, to obtain the first electronic signature.

Optionally, the first terminal device may further establish a secure transmission channel with the service system based on the second resource, and the first terminal device may send the feedback message to the service system through the secure transmission channel. In this way, security of the feedback message can be ensured.

S405: The service system determines a verification result of the first electronic signature.

In a possible implementation, the service system may send the first electronic signature to a business system, and may receive the verification result from the business system, which means that the service system determines the verification result. The verification result indicates that verification on the first electronic signature succeeds or verification on the first electronic signature fails. That verification succeeds may represent that the first electronic signature is verified to be valid. That verification fails may also be referred to as a verification failure, and that verification fails may represent that the first electronic signature is verified to be invalid.

Optionally, if the feedback message further includes the signature video, the service system may also send the signature video to the business system.

There are a plurality of manners in which the business system determines the verification result, and the following provides descriptions by using examples.

Manner 1: The business system determines the verification result depending on whether the first electronic signature is a handwritten signature.

If the first electronic signature is the handwritten signature, the business system may determine that the verification result is that verification on the first electronic signature succeeds. If the business system determines that the first electronic signature is not the handwritten signature, the business system determines that the verification result is that verification on the first electronic signature fails.

For example, the business system may extract a handwriting feature of the first electronic signature, and may compare the handwriting feature with a target feature. The target feature indicates a feature of handwriting input by a device. If a similarity between the handwriting feature and the target feature is greater than or equal to a first threshold, it indicates that the first electronic signature is more similar to the handwriting input by the device. Therefore, the business system may determine that the verification result is that verification on the first electronic signature fails. If a similarity between the handwriting feature and the target feature is less than a first threshold, it indicates that the first electronic signature is the handwritten signature. Therefore, the business system may determine that the verification result is that verification on the first electronic signature succeeds. The target feature and the first threshold may be prestored in the business system. The first threshold is, for example, 0.8.

Manner 2: The business system determines the verification result of the first electronic signature depending on whether a name indicated by the first electronic signature is a name of the user.

If the name indicated by the first electronic signature is not the name of the user, the business system determines that the verification result is that verification on the first electronic signature fails. If the name indicated by the first electronic signature is the name of the user, the business system determines that the verification result is that verification on the first electronic signature succeeds. The name of the user may be preconfigured in the business system.

Manner 3: The business system determines the verification result of the first electronic signature with reference to Manner 1 and Manner 2.

If the first electronic signature is a handwritten signature, and a name indicated by the first electronic signature is a name of the user, the business system may determine that the verification result is that verification on the first electronic signature succeeds. If the first electronic signature is not a handwritten signature, and/or a name indicated by the first electronic signature is not a name of the user, the business system determines that the verification result is that verification on the first electronic signature fails.

Manner 4: The business system determines the verification result of the first electronic signature depending on whether handwriting of the first electronic signature matches handwriting of the user. The handwriting of the user refers to real handwriting of the user, and the handwriting of the user may be preconfigured in the business system.

For example, if the handwriting of the first electronic signature matches the handwriting of the user, the business system determines that the verification result is that verification on the first electronic signature succeeds. If the handwriting of the first electronic signature does not match the handwriting of the user, the business system determines that the verification result is that verification on the first electronic signature fails.

For example, the business system may extract a handwriting feature of the first electronic signature. If a similarity between the handwriting feature of the first electronic signature and a feature of the handwriting of the user is greater than or equal to a second threshold, it indicates that the handwriting of the first electronic signature matches the handwriting of the user. If a similarity between the handwriting feature of the first electronic signature and a feature of the handwriting of the user is less than a second threshold, it indicates that the handwriting of the first electronic signature does not match the handwriting of the user. The feature of the handwriting of the user and the second threshold may be prestored in the business system. The second threshold is, for example, 0.8.

Manner 1 to Manner 4 describe examples of a manner in which the business system determines the verification result. Actually, there are a plurality of manners in which the business system determines the verification result of the first electronic signature. This is not specifically limited in embodiments of this application.

In a possible implementation, when the feedback message further includes the signature video, the first terminal device may determine that the user can be identified from the signature video. If the first terminal device identifies the user from the signature video, it indicates that the signature video is a signature of the user. In this way, reliability of the first electronic signature is further ensured. If the first terminal device determines that the user is not identified from the signature video, the first terminal device may determine that verification on the first electronic signature fails.

Optionally, after determining the verification result of the first electronic signature, the business system may perform encryption processing on the first electronic signature and a timestamp of the first electronic signature, to obtain first encrypted information. The business system may further store the first encrypted information in a blockchain system. The timestamp of the first electronic signature is, for example, a time point at which the business system receives the first electronic signature. The first encrypted information is, for example, a hash calculation result of the first electronic signature and the timestamp of the first electronic signature.

Optionally, when the feedback message further includes the signature video, the first encrypted information may be obtained by performing hash calculation on the first electronic signature, the timestamp of the first electronic signature, and the signature video.

In this implementation, the first terminal device may write the first encrypted information into the blockchain system, to ensure, through a blockchain technology, that the first electronic signature is not tampered with, ensure integrity of an evidence chain, and ensure security and trustworthiness of a process of performing the first electronic signature.

In another possible implementation, the service system may directly verify the first electronic signature, to obtain the verification result. For a manner in which the service system verifies the first electronic signature, to obtain the verification result, refer to the foregoing content in which the business system determines the verification result. This is not specifically limited in embodiments of this application.

In this case, optionally, the service system may write the first encrypted information into the blockchain system. For content of the first encrypted information, refer to the foregoing descriptions.

S406: The service system sends the verification result to the second terminal device. Correspondingly, the second terminal device receives the verification result from the service system.

When the service system receives the first request message from the second terminal device, the service system may send the verification result to the second terminal device. This helps a customer service corresponding to the second terminal device to continue to handle a business for the user based on the verification result of the first electronic signature.

In embodiments of this application, the service system may directly request the electronic signature from the first terminal device of the user, and may determine the verification result of the first electronic signature of the user without intervention of the customer service. This can reduce operations and workload of the customer service, and can also avoid a case in which the customer service tampers with the electronic signature, to improve reliability of verifying the electronic signature. In addition, the first terminal device sends the feedback message to the service system through the session initiation protocol, so that the feedback message is not easily tampered with or disclosed. This helps improve reliability of the electronic signature. In addition, after the first terminal device establishes a call with the second terminal device, the service system may request the first electronic signature from the first terminal device through an identifier of a first session corresponding to the call. For the user, it means that a process of performing the electronic signature is completed in a call process. In addition, the service system may send the second request message through the first session description protocol message, and the service system does not need to send the second request message through a dedicated message. In this way, modification to the first session description protocol message can be reduced, and an implementation cost of verifying the electronic signature can be reduced.

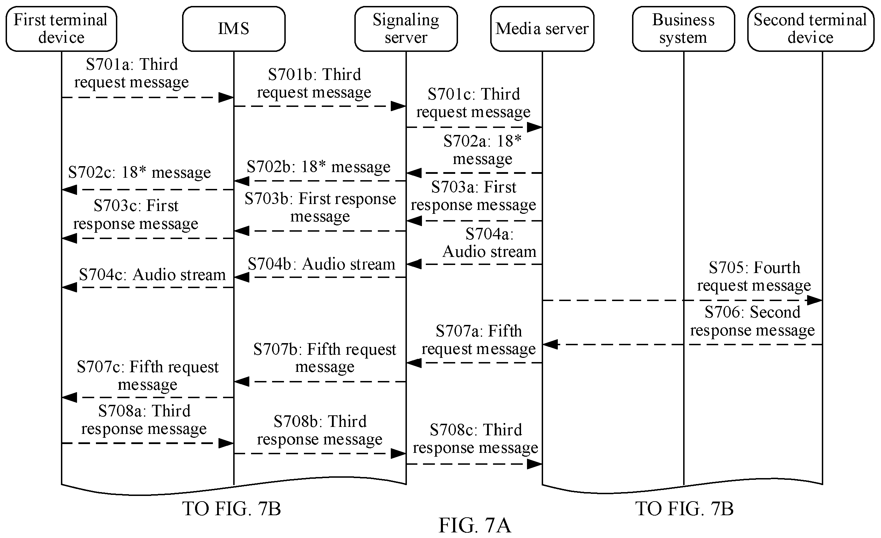

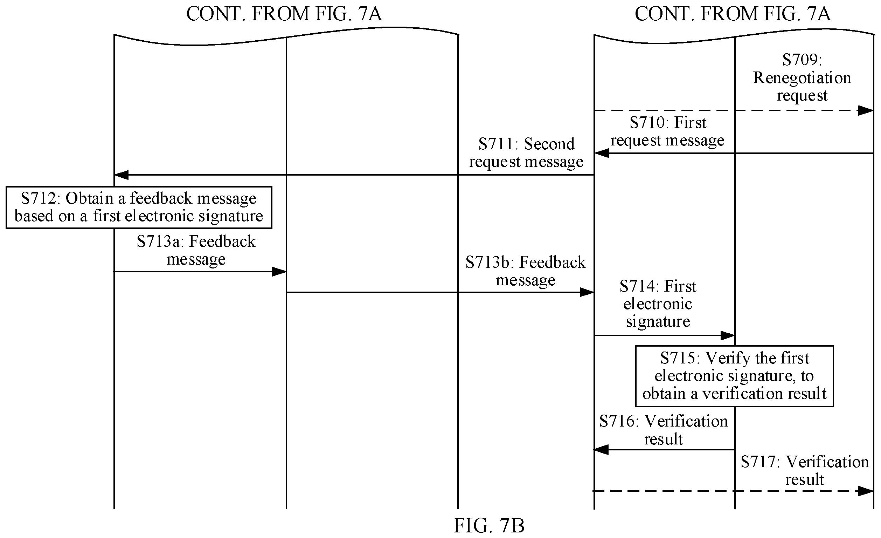

In a possible implementation, the service system includes a signaling server and a media server. With reference to a schematic flowchart of an electronic signature verification method shown in FIG. 7A and FIG. 7B, the following describes an example of interaction between the signaling server and the media server. The schematic flowchart includes the following steps.

S701: A first terminal device sends a third request message to a media server. Correspondingly, the media server receives the third request message from the first terminal device. The third request message is used to access the media server. The third request message may also be referred to as a first invite (invite) message.

For example, a user dials a customer service access code, and correspondingly, the first terminal device may send the third request message to the media server through a session initiation protocol. The customer service access code may indicate a phone number of a customer service. The third request message may be carried in a second session description protocol message.

Optionally, the third request message may include third media resource information. The third media resource information indicates a third resource. The third resource is used for communication between the first terminal device and the media server, the third resource may be specifically used for a call between the first terminal device and a second terminal device, and the call may include a VOLTE call. The third resource includes, for example, one or more of an IP address, an audio port number, an audio encoding resource, and an audio decoding resource of the first terminal device.

In an example, S701 includes S701a, S701b, and S701c. S701a: The first terminal device sends the third request message to an IMS. Correspondingly, the IMS receives the third request message from the first terminal device. S701b: The IMS sends the third request message to the signaling server. Correspondingly, the signaling server receives the third request message from the IMS. S701c: The signaling server sends the third request message to the media server. Correspondingly, the media server receives the third request message from the signaling server.

In an example, in S701a, the first terminal device may specifically send the third request message to an I-CSCF in the IMS. In addition, in S701b, the IMS may send the third request message to the service system in a transparent transmission manner.

S702: The media server sends an 18* message to the first terminal device. The 18* message indicates that the media server is in a ringing state.

In an example, S702 includes S702a, S702b, and S702c. S702a: The media server sends the 18* message to the signaling server. Correspondingly, the signaling server receives the 18* message from the media server. S702b: The signaling server sends the 18* message to the IMS. Correspondingly, the IMS receives the 18* message from the signaling server. S702c: The IMS sends the 18* message to the first terminal device. Correspondingly, the first terminal device receives the 18* message from the IMS.

In S702c, the IMS may send the 18* message to the first terminal device in the transparent transmission manner.

Optionally, the 18* message further includes fourth media resource information, and the fourth media resource information indicates a fourth resource. The fourth resource is used for communication between the media server and the first terminal device. For example, the fourth resource may be specifically used for a call between the media server and the first terminal device. For content of the fourth resource, refer to the foregoing content of the third resource. In an example, the fourth media resource information may be carried in a third session description protocol message.

S703: The media server sends a first response message to the first terminal device. Correspondingly, the first terminal device receives the first response message from the media server. For example, the first response message indicates that the media server determines to establish communication with the first terminal device.

In an example, S703 includes S703a, S703b, and S703c. S703a: The media server sends the first response message to the signaling server. Correspondingly, the signaling server receives the first response message from the media server. S703b: The signaling server sends the first response message to the IMS. Correspondingly, the signaling server receives the first response message from the IMS. S703c: The IMS sends the first response message to the first terminal device. Correspondingly, the first terminal device receives the first response message from the IMS.

S704: The media server sends an audio stream to the first terminal device.

The audio stream is, for example, IVR. The audio stream may be used as a self-service audio stream to assist the user in performing an operation. The audio stream may be prestored in the media server.

In an example, S704 includes S704a, S704b, and S704c. S704a: The media server sends the audio stream to the signaling server. Correspondingly, the signaling server receives the audio stream from the media server. S704b: The signaling server sends the audio stream to the IMS. Correspondingly, the signaling server receives the audio stream from the IMS. S704c: The IMS sends the audio stream to the first terminal device. Correspondingly, the first terminal device receives the audio stream from the IMS.

S705: The media server sends a fourth request message to the second terminal device. Correspondingly, the second terminal device receives the fourth request message from the media server. For example, the fourth request message requests the second terminal device to establish a call with the first terminal device.

For example, when the user presses a key or a voice call is transferred to a manual service, the first terminal device may send a media stream to the media server. For example, the first terminal device may send the media stream to the media server through an RTP. The media stream indicates that the user requests to transfer to the manual service. After receiving the media stream from the first terminal device, the media server determines that the user requests to transfer to the manual service. Therefore, the media server may allocate a customer service person to the user, and send the fourth request message to a terminal device (the second terminal device is used as an example in embodiments of this application) corresponding to the customer service person. The fourth request message may also be referred to as a second invite message.

Optionally, the fourth request message further includes fifth media resource information. The fifth media resource information indicates a fifth resource. The fifth resource is used for communication between the media server and the second terminal device. For example, the fifth resource is specifically used for a call between the media server and the second terminal device.

S706: The second terminal device sends a second response message to the media server. Correspondingly, the media server receives the second response message from the second terminal device. The second response message is used to request to establish communication with the first terminal device.

S707: The media server sends a fifth request message to the first terminal device. Correspondingly, the first terminal device receives the fifth request message from the media server. The fifth request message indicates a request for renegotiation with the first terminal device.

In an example, S707 includes S707a, S707b, and S707c. S707a: The media server sends the fifth request message to the signaling server. Correspondingly, the signaling server receives the fifth request message from the media server. S707b: The signaling server sends the fifth request message to the IMS. Correspondingly, the IMS receives the fifth request message from the signaling server. S707c: The IMS sends the fifth request message to the first terminal device. Correspondingly, the first terminal device receives the fifth request message from the IMS.

Optionally, the fifth request message includes sixth media resource information. The sixth media resource information indicates a sixth resource. The sixth resource is used to establish communication with the first terminal device, for example, used to establish a call with the first terminal device. The sixth resource is the same as or different from the foregoing fourth resource.

S708: The first terminal device sends a third response message to the media server. Correspondingly, the media server receives the third response message from the first terminal device.

In an example, S708 includes S708a, S708b, and S708c. S708a: The first terminal device sends the third response message to the IMS. Correspondingly, the IMS receives the third response message from the first terminal device. S708b: The IMS sends the third response message to the signaling server. Correspondingly, the signaling server receives the third response message from the IMS. S708c: The signaling server sends the third response message to the media server. Correspondingly, the media server receives the third response message from the signaling server.

Optionally, the third response message includes seventh media resource information. The seventh media resource information indicates a seventh resource. The seventh resource is used to establish communication with the second terminal device, for example, used to establish a call with the second terminal device. The seventh resource may be the same as or different from the third resource.

S709: The media server sends a renegotiation request to the second terminal device. Correspondingly, the second terminal device receives the renegotiation request from the media server. The renegotiation request is used to renegotiate a resource with the second terminal device.

If the first terminal device and the second terminal device are in a direct connection mode, the renegotiation request may include the seventh media resource information of the first terminal device.

If the first terminal device, the second terminal device, and the media server are in an audio conference mode, the renegotiation request may include the sixth media resource information of the media server.

In an example, S701 to S709 are optional steps, and are shown by using dashed lines in FIG. 7A and FIG. 7B.

S710: The second terminal device sends a first request message to the media server. Correspondingly, the media server receives the first request message from the second terminal device. For a meaning of the first request message, refer to the foregoing descriptions.

Optionally, the first request message includes eighth media resource information of the second terminal device. The eighth media resource information indicates an eighth resource. The eighth resource is used to establish communication with the first terminal device, and may be specifically used to establish a call with the first terminal device.

S711: The media server sends a second request message to the first terminal device. Correspondingly, the first terminal device receives the second request message from the media server. For a meaning of the second request message, refer to the foregoing descriptions.

S712: The first terminal device obtains a feedback message based on a first electronic signature.

For a meaning of the first electronic signature, a meaning of the feedback message, a manner in which a terminal device obtains the first electronic signature, and a manner in which the terminal device obtains the feedback message, refer to the foregoing descriptions.

S713: The first terminal device sends the feedback message to the media server. Correspondingly, the media server receives the feedback message from the first terminal device. For the meaning of the feedback message, refer to the foregoing descriptions.

In an example, S713 includes S713a and S713b. S713a: The first terminal device sends the feedback message to the IMS. Correspondingly, the IMS receives the feedback message from the first terminal device. S713b: The IMS sends the feedback message to the media server. Correspondingly, the media server receives the feedback message from the IMS.

S714: The media server sends the first electronic signature to a business system. Correspondingly, the business system receives the first electronic signature from the media server.

S715: The business system verifies the first electronic signature, to obtain a verification result.

For a meaning of the verification result and a manner in which the business system verifies the first electronic signature, refer to the foregoing descriptions.

In a possible implementation, the business system may perform encryption processing on the first electronic signature and a timestamp of the first electronic signature, to obtain first encrypted information. The business system may further store the first encrypted information in a blockchain system. The timestamp of the first electronic signature is, for example, a time point at which the business system receives the first electronic signature. The first encrypted information is, for example, a hash calculation result of the first electronic signature and the timestamp of the first electronic signature. Optionally, when the feedback message further includes a signature video, the first encrypted information may be a hash calculation result of the first electronic signature, the timestamp of the first electronic signature, and the signature video.

S716: The business system sends the verification result to the media server. Correspondingly, the media server receives the verification result from the business system.

S717: The media server sends the verification result to the second terminal device. Correspondingly, the second terminal device receives the verification result from the media server.

Optionally, after receiving the verification result, the media server may switch the call between the media server and the first terminal device to an automatic audio/video call phase, and may continue to perform following business procedure processing.

In an example, S717 is an optional step, and is shown by using a dashed line in FIG. 7A and FIG. 7B.

In embodiments of this application, the first terminal device may send the feedback message to the media server based on a session channel established between the first terminal device and the second terminal device, without depending on an application in the first terminal device or separately establishing a media channel for performing transmission on an electronic signature. A process of verifying the electronic signature can be implemented during a call. In addition, the first terminal device may perform transmission on the feedback message through the session initiation protocol, to ensure security and trustworthiness of the feedback message. In addition, when a call is established between the first terminal device and the second terminal device, the first terminal device may directly communicate with the media server, and the media server directly initiates a signature invitation to the first terminal device, so that the user can seamlessly complete a signature process during a call, and user experience is improved.

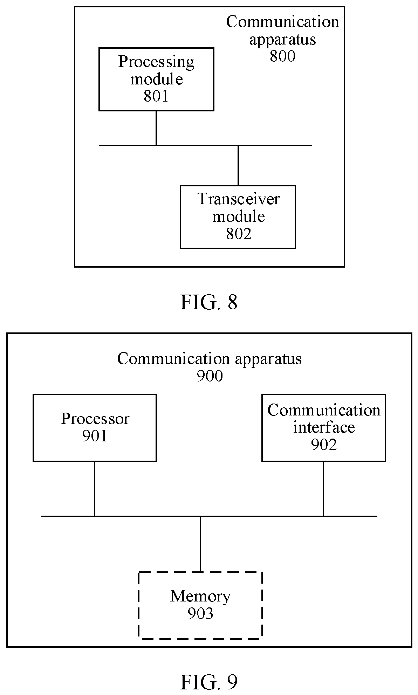

Embodiments of this application provide a communication apparatus. For example, FIG. 8 is a diagram of a structure of a communication apparatus according to an embodiment of this application.

As shown in FIG. 8, a communication apparatus 800 includes a processing module 801 and a transceiver module 802.

In a first embodiment, the communication apparatus 800 may be configured to implement a function of a service system, for example, a function of the service system in FIG. 4 or a function of the service system in FIG. 7A and FIG. 7B.

For example, the communication apparatus 800 is configured to implement the function of the service system in FIG. 4. Correspondingly, the transceiver module 802 may be configured to perform step S402 and step S404, and the processing module 801 may be configured to perform step S405.

For another example, the communication apparatus 800 is configured to implement the function of the service system in FIG. 7A and FIG. 7B. Correspondingly, the transceiver module 802 may be configured to perform step S710, step S711, and step S713a, and the processing module 801 may be configured to perform step S715.

In a first embodiment, the communication apparatus 800 may be configured to implement a function of a first terminal device, for example, a function of the first terminal device in FIG. 4 or a function of the first terminal device in FIG. 7A and FIG. 7B.

For example, the communication apparatus 800 is configured to implement the function of the first terminal device in FIG. 4. Correspondingly, the transceiver module 802 may be configured to perform step S402 and step S404, and the processing module 801 may be configured to perform step S403.

For another example, the communication apparatus 800 is configured to implement the function of the first terminal device in FIG. 7A and FIG. 7B. Correspondingly, the transceiver module 802 may be configured to perform step S711 and step S713a, and the processing module 801 may be configured to perform step S712.

In a third embodiment, the communication apparatus 800 may be configured to implement a function of a second terminal device, for example, a function of the second terminal device in FIG. 4 or a function of the second terminal device in FIG. 7A and FIG. 7B.

For example, the communication apparatus 800 is configured to implement the function of the second terminal device in FIG. 4. Correspondingly, the transceiver module 802 may be configured to perform step S401 and step S406 under control of the processing module 801.

For another example, the communication apparatus 800 is configured to implement the function of the second terminal device in FIG. 7A and FIG. 7B. Correspondingly, the transceiver module 802 may perform step S710 under control of the processing module 801.

In a fourth embodiment, the communication apparatus 800 may be configured to implement a function of a business system, for example, a function of the business system in FIG. 4 or a function of the business system in FIG. 7A and FIG. 7B.

For another example, the communication apparatus 800 is configured to implement the function of the business system in FIG. 7A and FIG. 7B. Correspondingly, the transceiver module 802 may be configured to perform step S714 and step S716, and the processing module 801 may be configured to perform step S715.

Embodiments of this application provide a communication apparatus. For example, FIG. 9 is a diagram of a structure of a communication apparatus according to an embodiment of this application.

As shown in FIG. 9, a communication apparatus 900 includes a processor 901 and a communication interface 902. The processor 901 and the communication interface 902 are coupled to each other. It may be understood that the communication interface 902 may be a transceiver or an input/output interface. The processor 901 and the communication interface 902 may be configured to implement any one of the foregoing electronic signature verification methods, for example, the electronic signature verification method in FIG. 4 or the electronic signature verification method in FIG. 7A and FIG. 7B.

The processor 901 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a transistor logic device, a hardware component, or any combination thereof. The general-purpose processor may be a microprocessor or any regular processor.

Optionally, the communication apparatus 900 may further include a memory 903, configured to store instructions executed by the processor 901, store input data needed by the processor 901 to run the instructions, or store data generated after the processor 901 runs the instructions. In FIG. 9, a dashed box indicates that the memory 903 is an optional module.

Embodiments of this application provide a communication system. The communication system includes a first terminal device, a second terminal device, and a service system. The communication system may be configured to implement any one of the foregoing electronic signature verification methods. For a function of the first terminal device, a function of the second terminal device, and a function of the service system, refer to the foregoing content. Optionally, the communication system further includes any one of the foregoing blockchain systems.

Embodiments of this application provide a communication system. The communication system includes a first terminal device, a second terminal device, a business system, and a service system. The communication system may be configured to implement any one of the foregoing electronic signature verification methods. For a function of the first terminal device, a function of the second terminal device, a function of the business system, and a function of the service system, refer to the foregoing content. Optionally, the communication system further includes any one of the foregoing blockchain systems.

Embodiments of this application provide a chip system. The chip system includes: a processor and an interface. The processor is configured to invoke and run instructions from the interface. When the processor executes the instructions, any one of the foregoing electronic signature verification methods is implemented, for example, the electronic signature verification method in FIG. 4 or the electronic signature verification method in FIG. 7A and FIG. 7B.

Embodiments of this application provide a computer-readable storage medium. The computer-readable storage medium is configured to store a computer program or instructions. When the computer program or the instructions are run, any one of the foregoing electronic signature verification methods is implemented, for example, the electronic signature verification method in FIG. 4 or the electronic signature verification method in FIG. 7A and FIG. 7B.

Embodiments of this application provide a computer program product including instructions. When the computer program product is run on a computer, any one of the foregoing electronic signature verification methods is implemented, for example, the electronic signature verification method in FIG. 4 or the electronic signature verification method in FIG. 7A and FIG. 7B.

The method steps in embodiments of this application may be implemented by hardware, or may be implemented by a processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a base station or a terminal. Certainly, the processor and the storage medium may exist in the base station or the terminal as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, a computer, a server, or a data center to another website, computer, server, or data center in a wired manner or a wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean execution sequences, and the execution sequences of the processes should be determined based on functions and internal logic of the processes.

## Claims

1. An electronic signature verification method, applied to a service system, wherein the method comprises:
receiving (S401) a first request message from a second terminal device, wherein the first request message is used to request an electronic signature corresponding to a first terminal device, wherein the first request message comprises an identifier of a first session, and the first session indicates a call channel established between the first terminal device and the second terminal device;
sending (S402) a second request message to the first terminal device based on the call channel, wherein the second request message is used to request to obtain the electronic signature corresponding to the first terminal device;
receiving (S404) a feedback message from the first terminal device, wherein the feedback message indicates a first electronic signature (502); and
determining (S405) a verification result of the first electronic signature (502).

2. The method according to claim 1, wherein the first request message indicates the first terminal device.

3. The method according to claim 1 or 2, wherein the second request message comprises an identifier of an electronic signature function, and the identifier of the electronic signature function indicates that the service system has a capability of transmitting the electronic signature.

4. The method according to any one of claims 1 to 3, wherein the second request message comprises first media resource information of the service system, and the first media resource information indicates a first resource used by the service system to transmit a video; and the method further comprises:
receiving second media resource information from the first terminal device, wherein the second media resource information indicates a second resource used by the first terminal device to transmit a video; and
the receiving a feedback message from the first terminal device comprises:
receiving the feedback message through the first resource; and
decoding the feedback message based on the second resource, to obtain the first electronic signature (502), wherein the first electronic signature (502) is in a form of an image or a video.

5. The method according to any one of claims 1 to 3, wherein the method further comprises:
sending the verification result to the second terminal device.

6. The method according to any one of claims 1 to 5, wherein the determining a verification result of the first electronic signature (502) comprises:
sending the first electronic signature (502) to a business system; and
receiving the verification result from the business system.

7. An electronic signature verification method, applied to a first terminal device, wherein the method comprises:
receiving (S402) a second request message from a service system based on a session channel, wherein the second request message is used to request to obtain an electronic signature corresponding to the first terminal device, wherein the session channel is a call channel established between the first terminal device and a second terminal device;
receiving a first electronic signature (502) entered by a user; and
sending (S405) a feedback message to the service system, wherein the feedback message indicates the first electronic signature.

8. The method according to claim 7, wherein the second request message comprises an identifier of an electronic signature function, and the identifier of the electronic signature function indicates that the service system has a capability of transmitting the electronic signature.

9. The method according to claim 7 or 8, wherein the receiving a first electronic signature (502) entered by a user comprises:
displaying a signature box (500), wherein the signature box (500) indicates the user to sign; and
obtaining, through the signature box (500), the first electronic signature (502) entered by the user.

10. The method according to any one of claims 7 to 9, wherein the method further comprises:
sending second media resource information of the first terminal device to the service system, wherein the second media resource information indicates a second resource used by the first terminal device to transmit a video; and
encoding the first electronic signature (502) based on the second resource, to obtain the feedback message, wherein the first electronic signature (502) is in a form of an image or a video, and the feedback message is sent to the service system through the second resource.

11. A communication apparatus (800, 900), comprising: a processor (901) and a communication interface (902), wherein the communication interface (902) is configured to receive a signal from an apparatus other than the communication apparatus (800, 900) and transmit the signal to the processor (901), or send a signal from the processor (901) to an apparatus other than the communication apparatus (800, 900), and the processor executes code instructions through a logic circuit to implement the method according to any one of claims 1 to 6.

12. A communication apparatus (800, 900), comprising: a processor (901) and a communication interface (902), wherein the communication interface (902) is configured to receive a signal from an apparatus other than the communication apparatus (800, 900) and transmit the signal to the processor (901), or send a signal from the processor (901) to an apparatus other than the communication apparatus (800, 900), and the processor executes code instructions through a logic circuit to implement the method according to any one of claims 7 to 10.

13. A communication system, comprising the communication apparatus (800, 900) according to claim 11 and the communication apparatus (800, 900) according to claim 12.

## Patentansprüche

1. Verfahren zur Überprüfung elektronischer Unterschriften, angewandt auf ein Dienstsystem, wobei das Verfahren Folgendes umfasst:
Empfangen (S401) einer ersten Anforderungsnachricht von einem zweiten Endgerät, wobei die erste Anforderungsnachricht dazu verwendet wird, eine elektronische Unterschrift anzufordern, die einem ersten Endgerät entspricht, wobei die erste Anforderungsnachricht eine Kennung einer ersten Sitzung umfasst und die erste Sitzung einen Anrufkanal angibt, der zwischen dem ersten Endgerät und dem zweiten Endgerät eingerichtet ist;
Senden (S402) einer zweiten Anforderungsnachricht an das erste Endgerät basierend auf dem Anrufkanal, wobei die zweite Anforderungsnachricht dazu verwendet wird, anzufordern, die elektronische Unterschrift zu erlangen, die dem ersten Endgerät entspricht;
Empfangen (S404) einer Rückmeldenachricht von dem ersten Endgerät, wobei die Rückmeldenachricht eine erste elektronische Unterschrift (502) angibt; und
Bestimmen (S405) eines Überprüfungsergebnisses der ersten elektronischen Unterschrift (502).

2. Verfahren nach Anspruch 1, wobei die erste Anforderungsnachricht das erste Endgerät angibt.

3. Verfahren nach Anspruch 1 oder 2, wobei die zweite Anforderungsnachricht eine Kennung einer elektronischen Unterschriftfunktion umfasst und die Kennung der elektronischen Unterschriftfunktion angibt, dass das Dienstsystem eine Fähigkeit zum Übertragen der elektronischen Unterschrift aufweist.

4. Verfahren nach einem der Ansprüche 1 bis 3, wobei die zweite Anforderungsnachricht erste Medienressourceninformationen des Dienstsystems umfasst und die ersten Medienressourceninformationen eine erste Ressource angeben, die durch das Dienstsystem verwendet wird, um ein Video zu übertragen; und das Verfahren ferner Folgendes umfasst:
Empfangen zweiter Medienressourceninformationen von dem ersten Endgerät, wobei die zweiten Medienressourceninformationen eine zweite Ressource angeben, die durch das erste Endgerät verwendet wird, um ein Video zu übertragen; und
das Empfangen einer Rückmeldenachricht von dem ersten Endgerät Folgendes umfasst:
Empfangen der Rückmeldenachricht mittels der ersten Ressource; und
Dekodieren der Rückmeldenachricht basierend auf der zweiten Ressource, um die erste elektronische Unterschrift (502) zu erlangen, wobei die erste elektronische Unterschrift (502) in einer Form eines Bildes oder eines Videos vorliegt.

5. Verfahren nach einem der Ansprüche 1 bis 3, wobei das Verfahren ferner Folgendes umfasst:
Senden des Überprüfungsergebnisses an das zweite Endgerät.

6. Verfahren nach einem der Ansprüche 1 bis 5, wobei das Bestimmen eines Überprüfungsergebnisses der ersten elektronischen Unterschrift (502) Folgendes umfasst:
Senden der ersten elektronischen Unterschrift (502) an ein Geschäftssystem; und
Empfangen des Überprüfungsergebnisses von dem Geschäftssystem.

7. Verfahren zur Überprüfung elektronischer Unterschriften, angewandt auf ein erstes Endgerät, wobei das Verfahren Folgendes umfasst:
Empfangen (S402) einer zweiten Anforderungsnachricht von einem Dienstsystem basierend auf einem Sitzungskanal, wobei die zweite Anforderungsnachricht dazu verwendet wird, anzufordern, eine elektronische Unterschrift zu erlangen, die dem ersten Endgerät entspricht, wobei der Sitzungskanal ein Anrufkanal ist, der zwischen dem ersten Endgerät und einem zweiten Endgerät eingerichtet ist;
Empfangen einer ersten elektronischen Unterschrift (502), die durch einen Benutzer eingegeben wird; und
Senden (S405) einer Rückmeldenachricht an das Dienstsystem, wobei die Rückmeldenachricht die erste elektronische Unterschrift angibt.

8. Verfahren nach Anspruch 7, wobei die zweite Anforderungsnachricht eine Kennung einer elektronischen Unterschriftfunktion umfasst und die Kennung der elektronischen Unterschriftfunktion angibt, dass das Dienstsystem eine Fähigkeit zum Übertragen der elektronischen Unterschrift aufweist.

9. Verfahren nach Anspruch 7 oder 8, wobei das Empfangen einer ersten elektronischen Unterschrift (502), die durch einen Benutzer eingegeben wird, Folgendes umfasst:
Anzeigen eines Unterschriftenfelds (500), wobei das Unterschriftenfeld (500) dem Benutzer angibt, zu unterschreiben; und
Erlangen, mittels des Unterschriftenfelds (500), der ersten elektronischen Unterschrift (502), die durch den Benutzer eingegeben wird.

10. Verfahren nach einem der Ansprüche 7 bis 9, wobei das Verfahren ferner Folgendes umfasst:
Senden zweiter Medienressourceninformationen des ersten Endgeräts an das Dienstsystem, wobei die zweiten Medienressourceninformationen eine zweite Ressource angeben, die durch das erste Endgerät verwendet wird, um ein Video zu übertragen; und
Kodieren der ersten elektronischen Unterschrift (502) basierend auf der zweiten Ressource, um die Rückmeldenachricht zu erlangen, wobei die erste elektronische Unterschrift (502) in einer Form eines Bildes oder eines Videos vorliegt und die Rückmeldenachricht mittels der zweiten Ressource an das Dienstsystem gesendet wird.

11. Kommunikationsvorrichtung (800, 900), umfassend: einen Prozessor (901) und eine Kommunikationsschnittstelle (902), wobei die Kommunikationsschnittstelle (902) dazu konfiguriert ist, ein Signal von einer anderen Vorrichtung als der Kommunikationsvorrichtung (800, 900) zu empfangen und das Signal an den Prozessor (901) zu übertragen oder ein Signal von dem Prozessor (901) an eine andere Vorrichtung als die Kommunikationsvorrichtung (800, 900) zu senden, und der Prozessor Codeanweisungen mittels einer Logikschaltung ausführt, um das Verfahren nach einem der Ansprüche 1 bis 6 zu implementieren.

12. Kommunikationsvorrichtung (800, 900), umfassend: einen Prozessor (901) und eine Kommunikationsschnittstelle (902), wobei die Kommunikationsschnittstelle (902) dazu konfiguriert ist, ein Signal von einer anderen Vorrichtung als der Kommunikationsvorrichtung (800, 900) zu empfangen und das Signal an den Prozessor (901) zu übertragen oder ein Signal von dem Prozessor (901) an eine andere Vorrichtung als die Kommunikationsvorrichtung (800, 900) zu senden, und der Prozessor Codeanweisungen mittels einer Logikschaltung ausführt, um das Verfahren nach einem der Ansprüche 7 bis 10 zu implementieren.

13. Kommunikationssystem, umfassend die Kommunikationsvorrichtung (800, 900) nach Anspruch 11 und die Kommunikationsvorrichtung (800, 900) nach Anspruch 12.

## Revendications

1. Procédé de vérification de signature électronique, appliqué à un système de service, dans lequel le procédé comprend :
la réception (S401) d'un premier message de demande provenant d'un second dispositif terminal, dans lequel le premier message de demande est utilisé pour demander une signature électronique correspondant à un premier dispositif terminal, dans lequel le premier message de demande comprend un identifiant d'une première session, et la première session indique un canal d'appel établi entre le premier dispositif terminal et le second dispositif terminal ;
l'envoi (S402) d'un second message de demande au premier dispositif terminal sur la base du canal d'appel, dans lequel le second message de demande est utilisé pour demander l'obtention de la signature électronique correspondant au premier dispositif terminal ;
la réception (S404) d'un message de rétroaction provenant du premier dispositif terminal, dans lequel le message de rétroaction indique une première signature électronique (502) ; et
la détermination (S405) d'un résultat de vérification de la première signature électronique (502).

2. Procédé selon la revendication 1, dans lequel le premier message de demande indique le premier dispositif terminal.

3. Procédé selon la revendication 1 ou 2, dans lequel le second message de demande comprend un identifiant d'une fonction de signature électronique, et l'identifiant de la fonction de signature électronique indique que le système de service a une capacité de transmission de la signature électronique.

4. Procédé selon l'une quelconque des revendications 1 à 3, dans lequel le second message de demande comprend des premières informations de ressource multimédia du système de service, et les premières informations de ressource multimédia indiquent une première ressource utilisée par le système de service pour transmettre une vidéo ; et le procédé comprend en outre :
la réception des secondes informations de ressource multimédia provenant du premier dispositif terminal, dans lequel les secondes informations de ressource multimédia indiquent une seconde ressource utilisée par le premier dispositif terminal pour transmettre une vidéo ; et
la réception d'un message de rétroaction provenant du premier dispositif terminal comprend :
la réception du message de rétroaction par le biais de la première ressource ; et
le décodage du message de rétroaction sur la base de la seconde ressource, pour obtenir la première signature électronique (502), dans lequel la première signature électronique (502) est sous forme d'une image ou d'une vidéo.

5. Procédé selon l'une quelconque des revendications 1 à 3, dans lequel le procédé comprend également :
l'envoi du résultat de vérification au second dispositif terminal.

6. Procédé selon l'une quelconque des revendications 1 à 5, dans lequel la détermination d'un résultat de vérification de la première signature électronique (502) comprend :
l'envoi de la première signature électronique (502) à un système d'entreprise ; et
la réception du résultat de vérification provenant du système d'entreprise.

7. Procédé de vérification de signature électronique, appliqué à un premier dispositif terminal, dans lequel le procédé comprend :
la réception (S402) d'un second message de demande provenant d'un système de service sur la base d'un canal de session, dans lequel le second message de demande est utilisé pour demander l'obtention d'une signature électronique correspondant au premier dispositif terminal, dans lequel le canal de session est un canal d'appel établi entre le premier dispositif terminal et un second dispositif terminal ;
la réception d'une première signature électronique (502) entrée par un utilisateur ; et
l'envoi (S405) d'un message de rétroaction au système de service, dans lequel le message de rétroaction indique la première signature électronique.

8. Procédé selon la revendication 7, dans lequel le second message de demande comprend un identifiant d'une fonction de signature électronique, et l'identifiant de la fonction de signature électronique indique que le système de service a une capacité de transmission de la signature électronique.

9. Procédé selon la revendication 7 ou 8, dans lequel la réception d'une première signature électronique (502) entrée par un utilisateur comprend :
l'affichage d'une case de signature (500), dans lequel la case de signature (500) indique à l'utilisateur de signer ; et
l'obtention, par le biais de la case de signature (500), de la première signature électronique (502) entrée par l'utilisateur.

10. Procédé selon l'une quelconque des revendications 7 à 9, dans lequel le procédé comprend également :
l'envoi des secondes informations de ressource multimédia du premier dispositif terminal au système de service, dans lequel les secondes informations de ressource multimédia indiquent une seconde ressource utilisée par le premier dispositif terminal pour transmettre une vidéo ; et
l'encodage de la première signature électronique (502) sur la base de la seconde ressource, pour obtenir le message de rétroaction, dans lequel la première signature électronique (502) est sous forme d'une image ou d'une vidéo, et le message de rétroaction est envoyé au système de service par le biais de la seconde ressource.

11. Appareil de communication (800, 900), comprenant : un processeur (901) et une interface de communication (902), dans lequel l'interface de communication (902) est configurée pour recevoir un signal provenant d'un appareil autre que l'appareil de communication (800, 900) et transmettre le signal au processeur (901), ou envoyer un signal provenant du processeur (901) à un appareil autre que l'appareil de communication (800, 900), et le processeur exécute des instructions de code par le biais d'un circuit de logique pour mettre en oeuvre le procédé selon l'une quelconque des revendications 1 à 6.

12. Appareil de communication (800, 900), comprenant : un processeur (901) et une interface de communication (902), dans lequel l'interface de communication (902) est configuré pour recevoir un signal provenant d'un appareil autre que l'appareil de communication (800, 900) et transmettre le signal au processeur (901), ou envoyer un signal provenant du processeur (901) à un appareil autre que l'appareil communication (800, 900), et le processeur exécute des instructions de code par le biais d'un circuit logique pour mettre en œuvre le procédé selon l'une quelconque des revendications 7 à 10.

13. Système de communication, comprenant l'appareil de communication (800, 900) selon la revendication 11 et l'appareil de communication (800, 900) selon la revendication 12.
